# EUROPEAN PATENT APPLICATION

(11) **EP 2 030 960 A2**
(43) Date of publication of application: **04.03.2009**
(21) Application number: 08014829.9
(22) Date of filing: 21.08.2008
(51) Int. Cl.: C04B 35/486, C04B 35/50, C04B 35/624, C04B 35/632, C04B 35/634, B01D 71/02, B01D 67/00, B01D 69/14

(54) **Polymerised inorganic-organic precursor solutions and sintered membranes**

(30) Priority: 31.08.2007 DK 200701244
(71) Applicant: The Technical University of Denmark, 2800 Kgs. Lyngby (DK)
(72) Inventor: Menon, Mohan, 2640 Hedehusene (DK); Larsen, Peter Halvor, 4000 Roskilde (DK)

(57) **Abstract**

Polymerised inorganic-organic precursor solution obtainable according to a process comprising the steps of
(a) forming a solution of at least one metal cation and an organic compound and
(b) heating the solution to a temperature between 20 - 300°C to form a polymerised solution of precursor for nanosized oxides, and
(c) concluding the heating when the room temperature viscosity of the solution is from 10 to 500 mPa·s.

## Description

### FIELD OF THE INVENTION

The invention is directed to polymerised inorganic-organic precursor solutions prepared by polymerisation of metal ions. In particular, the invention relates to polymerised inorganic-organic precursor solutions useful as dispersants and sintering aids in suspensions of ceramic oxide powders and further relates to sintered membranes prepared with the inorganic-organic precursor solutions.

### BACKGROUND OF THE INVENTION

Sintering is defined as the thermal treatment of a powder or a compact material at a temperature below the melting point of the main constituent for the purpose of increasing its strength by bonding together of the powder particles. Sintering results in a reduction in porosity, rearrangement of material in the powder or compact material and shrinkage of the compact material.

Sintering aids are used to either decrease the sintering temperature or to increase the sintering rates, thereby increasing the sintered density at a given temperature. Either small amounts of metal oxides different from the ceramic oxide being sintered or nano-sized particles of the ceramic oxides can be used as sintering aids in the ceramic oxides.

Sintering aids are added to the ceramic oxides by mechanical mixing of these two components.

Properties of ceramic oxides on addition of sintering aids have been studied by Qui,J-Y. et al., Enhancement of Densification and Thermal Conductivity in A1N Ceramics by Addition of Nano-Sized Particles, J. Am. Ceram. Soc., 89[1] 377-380 (2006). Here it was observed that the addition of a small amount of a commercially available nano-sized A1N powder as a dopant and using sintering additives Y₂O₃ and CaO to a commercially available A1N raw powder showed that the presence of the nano-sized A1N powder improved the thermal conductivity of the samples. Densification was improved at lower temperatures and sintering was enhanced.

US patent No. 5494700 discloses a method of coating a substrate with a metal oxide film from an aqueous solution comprising a metal cation and a polymerizable organic solvent. The substrate is coated with a polycrystalline, metal oxide film using polymeric precursors and the resulting oxide films are dense and may be used as an electrolyte or electrode in SOFCs or as gas separation membranes.

WO patent application No. 03/099741 discloses a process for producing dense nanocrystalline composites such as ceramic bodies, coatings and multi-layered devices with uniform microstructure. Sol-gel solutions are used.

An important application of sintered materials and sintering aids is in components of solid oxide cells particularly solid oxide fuel cells (SOFC) and reversible solid oxide fuel cells or solid oxide electrolyser cells (SOEC). Sintered materials are also useful as gas separation membranes or as cells for electrochemical flue gas cleaning.

A solid oxide fuel cell is an electrochemical energy conversion device. It produces electricity from external supplies of fuel (on the anode side) and oxygen (on the cathode side) in presence of a solid electrolyte. The oxygen present in air on the cathode side is reduced to oxide ions that travel through the oxygen ion conducting electrolyte to the anode where it oxidises the fuel, typically hydrogen, giving electrons (electricity) heat and water. The hydrogen can also be derived by internal reforming of a hydrocarbon such as methane in the fuel cell. The electrolyte must be impervious to gases and electrons and should allow only the oxide ions to pass through.

Solid oxide fuel cells are high temperature fuel cells operating at temperatures of 650-1000°C. They are particularly useful in comparison with other types of fuel cells in that SOFCs may be operated on a large variety of fuels, such as H₂, methane (and higher hydrocarbons), CO and ammonia.

The use of SOFCs in power generation offers potential environmental benefits compared with power generation from sources such as combustion of fossil fuels in internal combustion engines.

Factors relevant to the performance of SOFCs are the density and oxide ion conductivity of the electrolyte. A density of more than 96% of the theoretical density is required to ensure gas tightness. It is desirable that the electrolyte is as dense as possible with high electrical conductivity. It is known that improved densification of the electrolyte is achieved by using sintering aids in the compositions used to prepare the electrolyte.

Reversible solid oxide fuel cells are solid oxide electrolyser cells in which electricity and water and possibly carbon dioxide are converted into hydrogen and possibly carbon monoxide. The reactions taking place are reversed in comparison to a solid oxide fuel cell and the cell acts as an electrolyser.

Oxygen separation membranes consist of a dense, mixed oxygen ion and electronic conducting membrane with electrodes on either side. Typical uses of such a membrane are to produce synthesis gas from partial oxidation of methane. To increase efficiency of combustion processes and high temperature oxidation processes, the membrane should be gas tight to prevent unwanted leakages. In order to have mechanical strength, these membranes are typically prepared on a support.

Electrodes on the oxygen rich side should be good catalysts for breaking down oxygen into oxide ions and have high oxide ion and electronic conductivities. Electrodes on the oxygen poor sides should have good oxide ion and electronic conductivity and should contain catalysts for oxidation.

Typical materials used on the oxygen rich side are doped cerium oxide, doped zirconium oxide, doped cobaltites/ferrites or mixtures thereof.

Typical materials used on the oxygen poor side are nickel, doped cerium oxide and doped zirconia. Typically, this side is used as a mechanical support.

Impurities are ubiquitous in raw materials. During sintering and under operation of sintered materials, impurities such as silica migrate towards the surface of the particles and grain boundaries and are present as a thin layer throughout the sintered material. This severely compromises properties such as the conductivity of the sintered material. In order to mitigate this effect, a scavenger such as alumina can be added which reacts with silica and immobilizes silica. The reaction product can be found as small pockets at some triple boundaries in the microstructure. Thus, the surfaces and the grain boundaries in the sintered material contain less silica. These properties have been studied by Lybye and Liu; a study of complex effects of alumina addition on conductivity of stabilised Zirconia, J. Europ. Ceram. Soc., 26, 599-604, (2006).

Addition of sintering aid in an incorrect amount leads to undesired changes in properties in the sintered ceramic oxide such as lowered conductivity and lowered strength and creep resistance at high temperature.

In order to minimize these compromising changes, the amount of sintering aid added should not exceed the amount needed. There is therefore a need for sintering aids which are effective directly on the surface of the ceramic oxide particles, as this is where they are needed the most. Mechanical mixing of the sintering aids with the ceramic oxides is an ineffective method.

It is therefore an objective of the invention to provide polymerised inorganic-organic precursor solutions useful as dispersants.

It is also an objective of the invention to provide nano sized oxide powders derived from combustion of the precursor solutions useful as sintering aids in the preparation of ceramic materials.

Additionally, an objective of the invention is to provide scavengers for the suppression of the effect of impurities utilizing the polymerised precursor solutions.

It is a further objective of the invention to provide sintered membranes utilising the polymerised precursor solutions, and which are useful in electrochemical devices such as solid oxide cells (SOFC/SOEC) or as separation membranes and in cells for electrochemical flue gas cleaning.

### SUMMARY OF THE INVENTION

The above objectives are achieved by the polymerised inorganic-organic precursor solutions of the invention, which are prepared by polymerisation of metal ions. The polymerised inorganic-organic precursor solutions are added to suspensions of ceramic oxide powders and act as dispersants in the suspension. Upon heating the polymerised inorganic-organic precursor solutions are converted to nano-sized powders which act as sintering aid during sintering of the ceramic oxide.

The invention concerns polymerized inorganic-organic precursor solutions effective as dispersant in suspensions prepared by polymerization of metal cations with organic monomers. The polymerised inorganic-organic precursor solution are obtainable according to a process comprising the steps of
(a) forming a solution of at least one metal cation and an organic compound, and
(b) heating the solution to a temperature between 20 - 300°C to form a polymerised solution of precursor for nano-sized oxides, and
(c) conclude the heating when the room temperature viscosity of the solution is from 10 to 500 mPa·s.

The invention also concerns the in-situ preparation of nano sized sintering aid prepared from the above mentioned polymerised inorganic-organic solution.

The invention further concerns the in-situ preparation of nano sized scavenging agents for neutralizing impurities prepared from the above mentioned polymerised solution.

The invention also concerns a sintered membrane obtainable by a process comprising the steps of:
(a) mixing the polymerised inorganic-organic precursor solution with a ceramic oxide powder, a solvent and optionally at least one polymeric compound to form a mixture,
(b) ball-milling the mixture to obtain a suspension,
(c) shaping the suspension,
(d) sintering the shaped suspension to obtain a sintered membrane.

Furthermore, the invention concerns solid oxide cells (SOFC/SOEC) and stacks, which include sintered membranes based on the polymerised inorganic-organic nano-particles.

The invention, furthermore, concerns gas separation membranes suitable for the separation of for instance oxygen or hydrogen or cells for the cleaning of flue gas (removal of soot particles and NOx).

### SUMMARY OF THE FIGURES

Fig. 1 shows a cross section of a fuel cell in which a sintering aid has been used.

Fig. 2 shows a cross section of a fuel cell prepared without sintering aid.

### DETAILED DESCRIPTION OF THE INVENTION

The polymerised inorganic-organic precursor solution of the invention is suitable for use as a dispersant in suspensions and upon heating of the consolidated suspension, the resulting nano particles obtained from the polymerised inorganic-organic precursor solution are suitable for use as sintering aids and scavengers in the preparation of sintered membranes due to their nano-size.

Nano-sized particles have a size defined as a mean average diameter in the range of 10⁻⁹ m. Their size is between 1 and 100 nm.

Due to their nano-size the sintering aids prepared from the polymerised inorganic-organic precursor solution of the invention have a very large surface area compared to materials that are not nano-sized and therefore have a higher driving force for sintering, thereby increasing the sintering activity.

The polymerised inorganic-organic precursor solution comprises inorganic-organic polymer precursors in the form of individual positively charged metal ions i.e. cations each having a polymeric backbone.

By the term "inorganic-organic precursor solution" is meant a solution of precursor particles, each particle having an inorganic part made up of individual positively charged metal ions and an organic part consisting of a polymeric backbone.

During the preparation of a sintered membrane of the invention, the inorganic-organic polymer precursors are attracted to the surface of the particles of the ceramic oxide powder. Each ceramic oxide particle is thus surrounded by a number of inorganic-organic polymer precursors with each metal cation adsorbed to the surface of each ceramic oxide particle and the polymeric backbone extending backwards and away from the ceramic oxide particle.

This provides similar charges (positive or negative) to the particles in suspension thereby keeping them dispersed. During sintering the polymeric backbone is removed by combustion leaving behind the ceramic oxide particle having a nano sized metal oxide layer on its surface. This nano sized metal oxide acts as the sintering aid during sintering of the ceramic oxide or as a scavenger for impurities.

If one or more polymers have been added to the mixture, then these polymers are also removed by combustion. This assists the sintering process and it can therefore be carried out at temperatures lower than conventional values. In case of scavengers, the nano-sized metal oxides on the surfaces of the ceramic oxide particles react with the impurities and immobilize them.

The nano sized metal oxides are thus derived in-situ from the inorganic-organic polymer precursors and are effective as sintering aids due to their structure and nano-size in comparison to the conventionally sized ceramic oxides to be sintered. The presence of the polymeric backbones in each inorganic-organic polymer precursor allows the even distribution of these precursors on the surface of each ceramic oxide particle. The absence of the polymeric backbone would lead to a less even distribution and the polymerised inorganic-organic polymer particles would be less effective as sintering aids.

Use of the nano sized metal oxides derived in-situ from the polymerised inorganic-organic precursor solution as sintering aids leads to higher density of sintered membranes and/or lower sintering temperature of sintered membranes compared to membranes sintered without addition of the polymerized inorganic-organic precursor solution. Electrical conductivity of the sintered membranes depends on the porosity, with lower porosity resulting in high electronic conductivity.

The polymerised inorganic-organic precursor solutions are also effective as dispersants due to the presence of the polymer chains and possible electrical charge. They function by adsorbing on the surface of suspended ceramic oxide particles and by keeping them separated due to electrostatic and steric forces. After the ceramic oxide suspension is consolidated or shaped into the required shape and sintered, nano-sized metal oxides are derived from the precursor solution mentioned earlier.

The nano sized metal oxides derived in-situ from the polymerised inorganic-organic precursor solution are furthermore also effective as scavengers of impurities and they show improved ability to immobilize the impurities by reacting with it. As discussed above, the inorganic-organic polymer precursors adsorb on the surface of the impure particles in suspension and leave the nano-sized metal oxides on the surface of the impure particles upon heating. Upon heating, the impurities migrate towards the surface. It is thus ensured that the scavengers are directed to areas where they are needed.

It is ensured that the added sintering aid goes directly to the surface of particles, where it is needed the most. This is better than mechanically mixing the sintering aids with the ceramic oxides. Additionally, the polymerized precursor acts as a dispersant when attached to the ceramic oxide particles in the suspension.

The polymerised inorganic-organic precursor solution of the invention is synthesized by first forming an aqueous solution of at least one metal cation. Subsequently, at least one organic compound is added and the metal cations are polymerized by controlling the pH and/or temperature of the solutions. The degree of polymerization is controlled by the concentration of metal cations, organic compounds and the length of time spent at the given temperature and pH.

Metals useful as cations are selected from the group of Ce, Gd, Co, Al, Mg, Fe, Ni, La, Sr, Mn, Y, Zr, Sc, Sm, Ti and mixtures thereof. Preferable are cations of Ce, Co, Al and Gd. The cation source compounds are those which exhibit substantial solubility in aqueous solutions and include nitrates, chlorides, carbonates, alkoxides and hydroxides of the appropriate metals in addition to the metals themselves. Preferable are nitrates, chlorides and carbonates, either hydrated or anhydrous.

Suitable organic compounds are monomeric compounds or compounds having a carbonyl group for polymerization. More preferably, the organic compound is ethylene glycol, acetylacetone or citric acid.

In order to ensure that the final nano sized metal oxide has the correct composition the cation source is preferably standardized thermo-gravimetrically prior to dissolution, to confirm their actual metal content. Subsequently, an appropriate amount of metal salt is dissolved in a solvent such as water along with the organic compound. pH of the solution is controlled to keep the cations in solution. pH can be controlled using neutral, acidic or basic agents added to the solution. Preferred acidic agent is nitric acid whereas the basic agent is ammonium hydroxide.

The cations and the organic compound in the solution are polymerized by controlling the temperature between 20°C and 300°C. Preferably, the polymerization temperatures are between 20 - 100°C. The extent of polymerization is controlled by the length of time spent at the polymerization temperature.

The polymerisation is monitored by means of the viscosity measurements. The solution is cooled to room temperature prior to the viscosity measurements. If the viscosity has not reached a pre-determined value, then the solution is reheated to the polymerisation temperature and the polymerisation continued. When the viscosity reaches the pre-determined value the polymerisation can be terminated by preferably cooling down the solution.

Suitable viscosities for the aqueous solution at room temperature are in the range of 10 to 500 mPa·s. Preferable is a viscosity in the range of 20 - 200 mPa·s.

The resulting solution thus contains polymerized precursors for nano sized metal oxides suitable for use in preparation of sintered membranes as dispersant and as a sintering aid.

The sintered membrane of the invention is prepared by suspending ceramic oxide powders in a solvent and adding the polymerised inorganic-organic precursor solution and optionally at least one polymeric compound to form a mixture.

The sintered membrane is obtained by a process comprising the steps of:
(a) forming a solution of at least one metal cation and at least one organic compound, and
(b) heating the solution to a temperature between 20 - 300°C to form a polymerised inorganic-organic solution of precursor for nano-sized metal oxides, and
(c) concluding the heating when the room temperature viscosity of the solution is from 10 to 500 mPa·s,
(d) mixing the polymerised inorganic-organic precursor solution with a ceramic oxide powder, a solvent and optionally at least one polymeric compound to form a mixture,
(e) ball-milling the mixture to obtain a suspension,
(f) shaping the suspension,
(g) sintering the shaped suspension to obtain a sintered membrane.

Examples of metals contained in ceramic oxide powders suitable for the preparation of sintered membranes for solid oxide fuel cells are Ce, Gd, Sr, Co, Mn, La, Ni, Ti, Sc, Fe, Y and Zr. However, other ceramic oxides conventionally used for SOFC preparation are also suitable.

Suitable solvents for the ceramic oxide powder are, for instance ethanol, methyl ethyl ketone, terpineol and water.

Organic binders in the form of polymers such as polyvinylbutyral (PVB), polyvinylpyrrolidone (PVP) and polyvinyl alcohol can also be added to the suspension to achieve required suspension properties such as viscosity for the chosen method of shaping and consolidation of the suspension.

The addition of at least one polymeric compound to the mixture is useful for regulating the viscosity of the mixture (also a suspension) to the preferred value and for providing the required strength during handling of the dry component.

Depending on the route chosen for shaping and consolidation of the suspension, one or more polymers have to be added to achieve the desired suspension properties. The polymeric compound can for instance be polyvinyl pyrrolidone (PVP), polyvinyl butyral (PVB) or polyvinyl alcohol (PVA). Preferable are PVP and PVB.

The mixture is then ball-milled to obtain a suspension which is then shaped by for instance moulding, spraying, tape casting or other means of consolidation known in the art. The shaped suspension is then sintered to obtain a sintered membrane.

In a preferred embodiment of the invention the sintered membrane is obtained by a process comprising the steps of:
(a) forming a solution of at least one metal cation and an organic compound, and
(b) heating the solution to a temperature between 20 - 300°C to form a polymerised solution of precursor for nano-sized oxides, and
(c) concluding the heating when the room temperature viscosity of the solution is from 10 to 500 mPa·s,
(d) mixing the polymerised inorganic-organic precursor solution with a ceramic oxide powder, a solvent and at least one polymeric compound to form a mixture,
(e) ball-milling the mixture to obtain a suspension,
(f) shaping the suspension,
(g) sintering the shaped suspension to obtain a sintered membrane.

In an embodiment of the invention, the suspension is shaped on a substrate and the substrate is sintered simultaneously with the shaped suspension.

In another embodiment of the invention the substrate is a membrane or an electrode for a fuel cell.

In an embodiment of the invention the sintered membrane is a gas tight membrane suitable for oxygen separation. The deposition of the gas tight membrane on the anode support provides the necessary mechanical strength for handling and during operation.

In an embodiment of the invention the sintered membrane is a gas tight membrane suitable for hydrogen separation.

In another embodiment of the invention the sintered membrane is a barrier layer suitable for deposition between an electrolyte and a cathode in a SOFC. The deposition of the barrier layer prevents the reaction between zirconia based electrolytes and the Co-Fe based cathodes during preparation and operation.

In a preferred embodiment of the invention, the barrier layer membrane suitable for deposition between an electrolyte and a cathode in a SOFC is obtained by a process comprising the steps of:
(a) forming a solution of at least one metal cation and an organic compound, and
(b) heating the solution to a temperature between 20 - 300°C to form a polymerised solution of precursor for nano-sized oxides, and
(c) concluding the heating when the room temperature viscosity of the solution is from 10 to 500 mPa·s,
(d) mixing the polymerised inorganic-organic precursor solution with a ceramic oxide powder, a solvent and at least one polymeric compound to form a mixture,
(e) ball-milling the mixture to obtain a suspension,
(f) shaping the suspension
(g) sintering the shaped suspension to obtain a barrier membrane layer.

In another embodiment of the invention, the sintered membrane is an electrolyte in a SOFC prepared on an anode support with anode and cathode electrodes on either side. The suspension is thus an electrolytic suspension and the substrate is an anode.

In a preferred embodiment of the invention, the sintered membrane is an electrolyte in a SOFC obtained by a process comprising the steps of:
(a) forming a solution of at least one metal cation and an organic compound and
(b) heating the solution to a temperature between 20 - 300°C to form a polymerised solution of precursor for nano-sized oxides, and
(c) concluding the heating when the room temperature viscosity of the solution is from 10 to 500 mPa·s,
(d) mixing the polymerised inorganic-organic precursor solution with a ceramic oxide powder, a solvent and at least one polymeric compound to form a mixture,
(e) ball-milling the mixture to obtain a suspension,
(f) shaping the suspension
(g) sintering the shaped suspension to obtain an electrolyte membrane layer.

In an embodiment of the invention the sintered membrane is suitable for use in a reversible solid oxide fuel cell/solid oxide electrolyser cell (SOEC).

Stacks comprising at least two solid oxide fuel cells are particularly useful for power generation.

In another embodiment of the invention, the sintered membrane is an electrolyte in an electrochemical flue gas cleaning cell.

In another embodiment of the invention, a polymerised inorganic-organic precursor solution based on aluminium (A1) is added as a scavenger for impurity silica in a SOFC electrolyte.

Sintering of metal oxides traditionally requires temperatures up to 1600°C. However, addition of the polymerised precursor solution as sintering aid in ceramic oxides allows sintering at lower temperatures, and high sintered densities.

At a given temperature, the sintered membrane obtained by the process of the invention has a higher density than conventionally produced membranes.

The sintered membrane is particularly suitable for use in SOFCs as an electrolyte, gas tight membrane or as a barrier layer membrane.

The invention also comprises a solid oxide fuel cell, solid oxide electrolyser cell or solid oxide membrane cell comprising the sintered membrane.

By solid oxide membrane (SOM) cells is meant an electrochemical cell of the solid oxide type in which both ions and electrons are transported across cell.

The invention further comprises a stack comprising at least two solid oxide fuel cells or at least two solid oxide membrane cells.

Furthermore, the invention comprises the use of a solid oxide membrane cell stack for oxygen separation.

The materials suitable for use in preparation of anodes, cathodes and electrolyte for SOFCs are as follows:

The anode material is preferably selected from the group consisting of compositions comprising NiO and/or doped zirconia and/or doped ceria alone or mixed with Al₂O₃, TiO₂, Cr₂O₃, MgO or the anode material is a material selected from the group consisting of:

MaₛTi₁₋ₓMbₓO_{3-δ}

where Ma = La, Ba, Sr, Ca; Mb = V, Nb, Ta, Mo, W, Th, U; and 0 ≤ s ≤ 0.5; or LnCr₁₋ₓMₓO_{3-δ}, where M = T, V, Mn, Nb, Mo, W, Th, U and Ln = Lanthanides.

The electrolyte material is preferably selected from the group consisting of doped zirconia, doped ceria, doped gallates and proton conducting electrolytes, in which the dopants are Sc, Y, Ce, Ga, Sm, Gd, Ca and/or any Ln element, or combinations thereof.

The cathode material is preferably selected from the group consisting of:
(La₁₋ₓSrₓ)ₛMnO_{3-δ} and (A₁₋ₓBₓ)ₛFe_{1-y}Co_{y}O_{3-δ}
where A = La, Gd, Y, Sm, Ln or mixtures thereof, and B = Ba, Sr, Ca, or mixtures thereof, and Ln = lanthanides.

The following lists the roles of the components used in the examples:

### - Sintering aid:

Added to the ceramic oxide for aiding sintering. Improved sintering implies that the sintering temperature of the ceramic oxide is lowered or the density of the sintered parent oxide is increased. For example MgO as a sintering aid for Al₂O₃, Co for CGO (oxide of cerium and gadolinium). Sintering of ceramic oxides can also be enhanced by addition of nano particles of the same ceramic oxide.

### - Dispersant:

Added to a suspension to keep the particles apart from each other i.e. keep the particles from agglomeration. Dispersion can be bought about by controlling the pH of the suspensions, whereby dispersion is by charge i.e. electrostatic stabilization.

Dispersion can also be brought about by adsorption of nonionic polymers such as PVP onto the surface of the particles, and thereby keeping the particles apart due to the interaction between the adsorbed polymers i.e. steric stabilization.

Furthermore, dispersion can be brought about by combining both electrostatic and steric stabilization by adsorption of charged polymers such as polyethylene imine, PEI, i.e. electrosteric stabilization. The amount added to the suspension is expressed in terms of wt% of the ceramic oxide.

### - Binder system:

Polymers used to provide the correct viscosity to the suspension and flexibility upon drying of the suspensions by binding the particles together. Commonly, PVA or PVB is used as a binder.

### - Scavenging agent:

Added to react with the impurities present in the ceramic oxide and immobilize them (or alternatively to increase the mobility so as to remove the impurities). For example Al₂O₃ can be added to immobilize SiO₂.

The following examples illustrate the preparation of the polymerised inorganic-organic precursor particles and the sintered membrane of the invention.

### EXAMPLES

### Example 1

### Manufacture of gas tight membranes for oxygen permeation

### Step 1: Preparation of sintering aid/dispersant:

Nitrates of Ce and Gd were calibrated for cation yield by heating them and monitoring weight loss in a TGA, (Thermogravimetric analyzer).

The polymerised inorganic-organic CGO precursor solution for CGO was prepared by dissolving Gd nitrate, Ce nitrate, ethylene glycol and concentrated HNO₃ in water. The solution was heated at 80°C for the metal cations to polymerize. Heating was stopped when room temperature viscosity of the solution reached 50 mPa·s. The solution was cooled to room temperature prior to viscosity measurements. The solution was heated to 80°C after the measurements, if needed.

### Step 2: Preparation of ceramic oxide CGO suspension:

CGO ceramic oxide powders with a median particle size of 300 nm (purchased from Rhodia) were mixed with 5 wt% of the polymerised inorganic-organic CGO precursor solution (calculated on basis of CGO powders) from step 1, polyvinyl pyrrolidone (PVP), polyvinyl butyral (PVB) and ethanol and ball milled overnight. Particle size distribution and viscosity of the resulting ceramic oxide CGO suspension were controlled.

When the polymerised inorganic-organic CGO precursor solution from step 1 is mixed with the CGO ceramic oxide powders, the inorganic-organic polymer precursors are attracted towards the CGO ceramic oxide particles and adsorb onto their surface and act as a dispersant. The adsorbed polymers impart similar charges onto the surface of the CGO ceramic oxide thus repelling them from each other.

### Step 3: Membrane preparation:

NiO and YSZ powders were mixed with organic binder system and tape casted to form an anode support. An anode layer consisting of NiO and YSZ was sprayed on top of the anode support. The ceramic oxide CGO suspension prepared in step 2 was then sprayed on the anode surface and the whole membrane sintered at 1200°C for 12h.

Upon heating, the polymerised inorganic-organic precursor solution prepared in step 1 gives nano sized CGO particles (median size 20 nm), which act as a sintering aid. The sintered membrane was tested and found to be gas tight for oxgen.

The gas tight membrane was suitable as an electrolyte membrane and cathode material comprising a mixture of LSCF - CGO (La-Sr-Co-Fe and Ce-Gd) was sprayed on the membrane to provide a solid oxide fuel cell.

### Example 2

### Manufacture of SOFC with CGO as electrolyte

### Step 1: Preparation of sintering aid/dispersant:

Cobalt nitrate was calibrated for cation yield by heating it and monitoring weight loss in a TGA.
A polymerised inorganic-organic Co₃O₄ precursor solution was prepared by dissolving Co nitrate, ethylene glycol, and concentrated HNO₃ in water. The solution was heated at 80°C for the metal cations to polymerize. Heating was stopped when room temperature viscosity of the solution reached 50 mPa·s. The solution was cooled to room temperature prior to viscosity measurements. The solution was heated to 80°C after the measurements, if needed.

### Step 2: Preparation of ceramic oxide CGO suspension:

CGO ceramic oxide powders with a median particle size of 300 nm (purchased from Rhodia) were mixed with 2 wt% of the polymerised inorganic-organic Co₃O₄ precursor solution (calculated on basis of CGO powders) from step 1, polyvinyl pyrrolidone (PVP), polyvinyl butyral (PVB) and ethanol and ball milled overnight. Particle size distribution and viscosity of the resulting ceramic oxide CGO suspension were controlled.

When the polymerised inorganic-organic CGO precursor solution from step 1 is mixed with the CGO powders, the precursors are attracted towards the particles and adsorb onto the surface of the CGO powders and acts as a dispersant. The adsorbed polymers impart similar charges onto the CGO surfaces, keeping them away from each other. In addition this ensures that the Co is present on the surfaces of CGO particles and are thereby most effective as a sintering aid during sintering.

### Step 3: SOFC preparation:

NiO and YSZ powders were mixed with organic binder system and tape casted to form an anode support. An anode layer consisting of NiO and CGO was sprayed on top of the anode support. The ceramic oxide CGO suspension prepared in step 2 was then sprayed on anode surface and the whole membrane sintered at 1150°C for 12h.

Upon heating, the polymerised inorganic-organic precursor solution prepared in step 1 gives nano sized Co oxide particles (median size 20 nm), which act as a sintering aid. The sintered membrane was tested and found to be gas tight.

The gas tight membrane was suitable as an electrolyte membrane and cathode material comprising a mixture of LSCF - CGO (La-Sr-Co-Fe and Ce-Gd) was sprayed on the membrane to provide a solid oxide fuel cell.

### Example 3

### Manufacture of SOFC with CGO as a barrier layer

### Step 1: Preparation of sintering aid/dispersant:

Nitrates of Ce and Gd were calibrated for cation yield by heating them and monitoring weight loss in a TGA, (Thermogravimetric analyzer).

The polymerised inorganic-organic CGO precursor solution was prepared by dissolving Gd nitrate, Ce nitrate, ethylene glycol and concentrated HNO₃ in water. The solution was heated at 80°C for the cations to polymerize. Heating was stopped when room temperature viscosity of the solution reached 50 mPa·s. The solution was cooled to room temperature prior to viscosity measurements. The solution was heated to 80°C after the measurements, if needed.

### Step 2: Preparation of ceramic oxide CGO suspension:

CGO ceramic oxide powders with a median particle size of 300 nm (purchased from Rhodia) were mixed with 5 wt% of the polymerised inorganic-organic CGO precursor solution (calculated on basis of CGO powders) from step 1, polyvinyl pyrrolidone (PVP), polyvinyl butyral (PVB) and ethanol and ball milled overnight. Particle size distribution and viscosity of the resulting ceramic oxide CGO suspension were controlled.

When the polymerised inorganic-organic CGO precursor solution from step 1 is mixed with the CGO ceramic oxide powders, the inorganic-organic polymer precursors are attracted towards the CGO ceramic oxide particles and adsorb onto their surface and act as a dispersant. The adsorbed polymers impart similar charges onto the surface of the CGO ceramic oxide thus repelling them from each other.

### Step 3: SOFC preparation:

NiO and YSZ powders were mixed with an organic binder system and tape casted to form an anode support. An anode layer consisting of NiO and YSZ was sprayed on top of the anode support. An electrolyte layer consisting of YSZ was sprayed on top of the anode. The ceramic oxide CGO suspension prepared in step 2 was then sprayed on the electrolyte layer as a barrier layer, and the whole body was sintered at 1315°C for 12h.

Upon heating, the polymerised inorganic-organic precursor solution prepared in step 1, gives nano sized CGO particles (median size 20 nm), which act as a sintering aid. Sintered bodies were tested for gas tightness and a cathode mixture of LSCF - CGO was sprayed on gas tight cells.

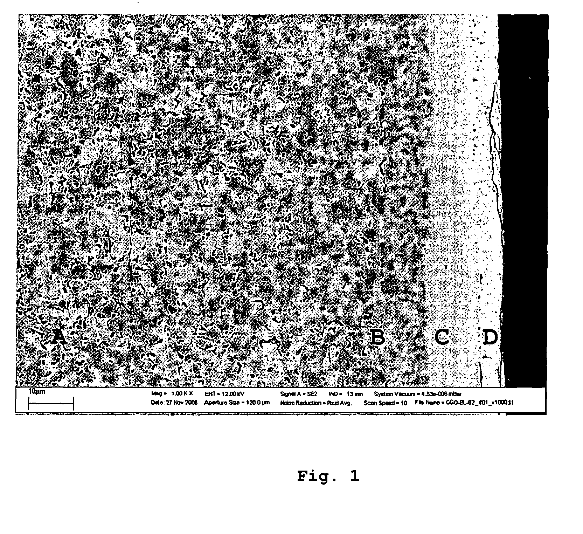

A SOFC according to the invention with ceramic oxide CGO barrier layer prepared in this way is shown in Figure 1. Layer A is a NiO-YSZ anode support, layer B is a NiO-YSZ anode, layer C is a YSZ electrolyte and layer D is a CGO membrane layer (sintering additive). It can be seen that CGO membrane layer D in Fig. 1 has very little porosity.

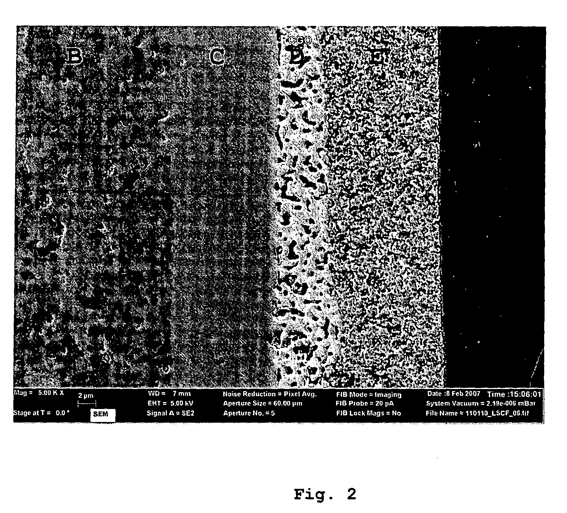

For comparison, Fig. 2 shows a comparative SOFC with a barrier layer prepared by spraying ceramic oxide CGO suspensions without addition of the polymerised inorganic-organic precursor solution and sintered in identical fashion. Layer B is a NiO-YSZ anode, layer C is a YSZ electrolyte, layer D is a CGO membrane layer (no sintering additive) and layer E is a LSCF-CGO cathode.

The SOFC shown in Fig. 2 also has a NiO-YSZ anode support layer as shown in Fig. 1. The package comprising layers A to D was given same heat treatment as the SOFC in Fig. 1. Layer E was applied subsequently. As observed in Fig. 2, the CGO layer is porous and therefore did not sinter to full density. This shows that without any sintering aid, the sintering temperature is too low for the CGO layer to achieve full density and the addition of a sintering aid results in lower porosity and higher density at the same temperature.

Barrier layers are needed in SOFCs to prevent reactions between the YSZ electrolyte and ferrite-cobaltite cathodes.

### Example 4

### Manufacture of dense layers of CGO on rigid substrates

### Step 1: Preparation of sintering aid/dispersant:

Nitrates of Ce and Gd were calibrated for cation yield by heating them and monitoring weight loss in a TGA.

A polymerised inorganic-organic precursor CGO solution was prepared by dissolving Gd nitrate and Ce nitrate in acetylacetone (CH₃COCH₂COCH₃) and refluxed for 2h. The concentration and viscosity of the solution was adjusted by addition of ethylene glycol.

### Step 2: Preparation of ceramic oxide CGO suspension:

CGO ceramic oxide powders with a median particle size of 300 nm (purchased from Rhodia) were mixed with 5 wt% of the polymerised inorganic-organic CGO precursor solution (calculated on basis of CGO powders) from step 1, polyvinyl pyrrolidone (PVP), polyvinyl butyral (PVB) and ethanol and ball milled overnight. Particle size distribution and viscosity of the resulting ceramic oxide CGO suspension were controlled.

When the polymerised inorganic-organic CGO precursor solution from step 1 is mixed with the CGO ceramic oxide powders, the inorganic-organic polymer precursors are attracted towards the CGO ceramic oxide particles and adsorb onto their surface and act as a dispersant. The adsorbed polymers impart similar charges onto the surface of the CGO ceramic oxide thus repelling them from each other.

### Step 3: CGO layer preparation:

Ceramic oxide CGO suspension prepared in step 2 was then deposited by spraying on top of a sintered YSZ surface. The layers were then sintered at 1000°C resulting in over 95% dense CGO layers.

Upon heating, the polymerised inorganic-organic precursor solution prepared in step 1 gives nano sized CGO particles (median size 10 nm), which act as a sintering aid.

### Example 5

### Addition of Al₂O₃ scavenger to SOFC electrolyte, Sc_{0.04}Y_{0.20}Zr_{0.76}O₂ (SYSZ) for removal of Si

### Step 1: Preparation of sintering aid/dispersant:

Aluminium nitrate was calibrated for cation yield by heating it and monitoring weight loss in a TGA.

Polymerised inorganic-organic Al₂O₃ precursor solution was prepared by dissolving Al nitrate in an aqueous solution of citric acid (CA). Subsequently 28 wt% ethylene glycol (calculated with respect to CA) was added to the solution. The solution was heated at 90°C for 2h.

### Step 2: Preparation of SYSZ suspension:

Sc_{0.04}Y_{0.20}Zr_{0.76}O₂ (SYSZ) ceramic oxide powders with a median particle size of 500 nm were mixed with 1 wt% of the polymerised inorganic-organic Al₂O₃ precursor solution from step 1 and ethanol, and ball milled overnight. Particle size distribution and viscosity of the suspension were controlled. The zeta potential, particle size distribution and rheology of the SYSZ suspension were controlled.

When the polymerized inorganic-organic precursor Al₂O₃ solution from step 1 is mixed with the SYSZ ceramic oxide powders, the inorganic-organic polymer precursors are attracted towards the particles and adsorb onto the surface of the SYSZ powders and acts as a dispersant. The adsorbed polymers impart similar charges onto the SYSZ surfaces, keeping them away from each other.

In addition, this ensures that the Al is present on the surfaces of particles, where the impurities are present and thereby is more effective as a scavenging agent.

### Step 3: SOFC preparation:

NiO and YSZ powders were mixed with organic binder system and tape casted to form an anode support. An anode layer consisting of NiO and YSZ was sprayed on top of the anode support. SYSZ suspension prepared in step 2 was then sprayed on top of the anode layer and the whole body was sintered at 1200°C for 12h. The sintered body was tested for gas tightness and a cathode mixture of LSM - SYSZ was sprayed on gas tight cells.

## Claims

1. Polymerised inorganic-organic precursor solution for nano-sized metal oxides obtainable according to a process comprising the steps of
(a) forming a solution of at least one metal cation and at least one organic compound and
(b) heating the solution to a temperature between 20 - 300°C to form a polymerised inorganic-organic solution of precursor for nano-sized metal oxides, and
(c) concluding the heating when the room temperature viscosity of the solution is from 10 to 500 mPa·s.

2. Polymerised inorganic-organic precursor solution according to claim 1, wherein the at least one metal cation is selected from the group consisting of Ce, Gd, Co, Al, Sm, Fe, Mg, Ni, Y, Zr, La, Sr, Mn, Sc, Ti and mixtures thereof.

3. Polymerised inorganic-organic precursor solution according to claim 1, wherein the at least one organic compound has a carbonyl group or is a monomeric compound.

4. Polymerised inorganic-organic precursor solution according to claim 3, wherein the at least one organic compound is ethylene glycol, citric acid or acetylacetone.

5. Sintered membrane obtainable by a process comprising the steps of:
(a) mixing the polymerised inorganic-organic precursor solution of claim 1 with a ceramic oxide powder, a solvent and optionally at least one polymeric compound to form a mixture,
(b) ball-milling the mixture to obtain a suspension,
(c) shaping the suspension,
(d) sintering the shaped suspension to obtain a sintered membrane.

6. Sintered membrane according to claim 5, wherein the suspension is shaped on a substrate and the substrate is sintered simultaneously with the shaped suspension.

7. Sintered membrane according to claim 6, wherein the substrate is a membrane or an electrode for a fuel cell.

8. Sintered membrane according to claim 6, wherein the suspension is an electrolytic suspension and the substrate is an anode.

9. Sintered membrane according to claim 5, wherein the ceramic oxide powder comprises metals selected from the group consisting of Ce, Gd, Co, Al, Sm, Mn, Fe; Mg, Ni, La, Sr, Y, Zr, Sc, Ti and mixtures thereof.

10. Sintered membrane according to claim 5, wherein the at least one polymeric compound is selected from the group consisting of polyvinyl pyrrolidone, polyvinyl alcohol, polyvinyl butyral and mixtures thereof.

11. Sintered membrane according to claim 5, wherein the solvent is selected from the group consisting of ethanol, methyl ethyl ketone, terpineol and water.

12. Solid oxide fuel cell, solid oxide electrolyser cell or solid oxide membrane cell comprising the sintered membrane of claim 5.

13. Stack comprising at least two solid oxide fuel cells, at least two solid oxide electrolyser cells or at least two solid oxide membrane cells according to claim 12.

14. Use of a stack according to claim 13 for gas separation.

15. Use of a stack comprising at least two solid oxide fuel cells according to claim 13 for power generation.

16. Use of a stack comprising at least two solid oxide membrane cells according to claim 13 for oxygen separation.
